# EUROPÄISCHE PATENTSCHRIFT

(11) **EP 2 658 669 B1**
(45) Veröffentlichungstag und Bekanntmachung des Hinweises auf die Patenterteilung: **21.02.2018**
(21) Anmeldenummer: 11788482.5
(22) Anmeldetag: 29.11.2011
(51) Int. Cl.: B23D 51/02

(54) **STICHSÄGE MIT EINER AUSTAUSCHBAREN SÄGEBLATTFÜHRUNG**
JIGSAW WITH AN EXCHANGEABLE SAW BLADE GUIDE
SCIE SAUTEUSE À GUIDE DE LAME INTERCHANGEABLE

(30) Priorität: 30.12.2010 DE 102010056504
(43) Veröffentlichungstag der Anmeldung: 06.11.2013
(73) Patentinhaber: Robert Bosch GmbH, 70442 Stuttgart (DE)
(72) Erfinder: MEIER, Samuel, CH-4553 Subingen (SO) (CH)
(86) Internationale Anmeldenummer: PCT/EP2011/071275
(87) Internationale Veröffentlichungsnummer: WO 2012/089434

(56) Entgegenhaltungen:
- CH-A- 486 965
- DE-A1- 3 118 758
- JP-U- 55 076 104
- US-A- 2 703 716
- US-A- 4 628 605

## Beschreibung

### Stand der Technik

Die Erfindung geht aus von einer Stichsäge nach dem Oberbegriff des Anspruchs 1.

Es sind handgeführte Stichsägen bekannt, deren Sägeblättern zusätzlich zur vertikalen Hin- und Herbewegung eine horizontale Pendelbewegung erteilt wird, die die vertikale Sägebewegung überlagert.

Die Pendelbewegung wird von einem Pendelmechanismus auf das Sägeblatt übertragen, indem beispielsweise eine Exzenterbewegung vom Exzenter eines rotierend antreibbaren, die Sägebewegung erzeugenden Exzenterzahnrades auf einen Gabelhebel mit offener Gabel zum Exzentereingriff übertragen wird. Dabei greift der Exzenter in eine Kulissenöffnung des schwenkbar gelagerten Gabelhebels erteilt diesem eine hin- und hergehende Schwenkbewegung.

Der Gabelhebel ragt mit seinem hin- und hergehend schwenkenden Ende aus dem Getriebegehäuse heraus und stützt sich mit diesem Ende unmittelbar auf einen Arm einer zweiarmigen - auch als Rollenführung bezeichnete - Sägeblattführung, die ihrerseits quer zur Schwenkebene des Gabelhebels schwenkbar gelagert ist. Über eine an ihrem anderen Arm drehbar gelagerte Stützrolle bzw. Pendelrolle stützt sich die Sägeblattführung gegen den Sägeblattrücken des Sägeblatts und überträgt ihre Pendelbewegung auf dieses.

Die DE 198 05 675 A1 offenbart eine Stichsäge mit einer Sägeblattführung, an der sich ein Rücken eines Sägeblatts der Stichsäge abstützt, wobei das

Befestigungselement einen Lagerabschnitt aufweist, auf dem die Sägeblattführung, insbesondere pendelnd, gelagert ist, so dass die Sägeblattführung an der Stichsäge gehalten ist. Die Sägeblattführung ist hierbei fest in der Pendelstichsäge montiert. Hierzu ist die Sägeblattführung mit einem Stift, der in das Gehäuse der Stichsäge gepresst ist, mit der Stichsäge verbunden. Die Rolle und die dazugehörige Sägeblattführung können nicht ohne weiteres vom Anwender ausgetauscht werden. Durch den Verschleiß der Rollen wird die Schnittqualität beeinträchtigt oder gar die Sägeblätter schneller zerstört.

Weitere Schriften, die eine Befestigung der Sägeblattführung über einen mittels Presssitz gehaltenen Stift offenbaren sind die DE 10 2008 056 528 A1,
DE 10 2009 000 034 A1, EP 1 513 645 B1, WO 2009/156210 A1, sowie US 2007/0180711 A1.

Eine alternative Befestigungsmethode der Sägeblattführung ist aus der EP 736 353 A1 bekannt, wo die als Lagerbock ausgeführte Sägeblattführung mit einem Niet befestigt ist, was ebenfalls bedeutet, dass der Anwender die Sägeblattführung nicht ohne weiteres austauschen kann.

Zwar könnten in allen Fällen die Sägeblattführungen ausgetauscht werden. Dies würde aber dazu führen, dass der Presssitz verschleißt oder das Befestigungselement - im Falle eines Niets - zerstört werden
US4628605 offenbart eine Stichsäge gemäß dem Oberbegriff des Anspruchs 1.

### Offenbarung der Erfindung

Die Erfindung mit den Merkmalen des Anspruchs 1 hat den Vorteil, dass der Anwender Sägeblattführungen für die von ihm gewünschte Anwendung auf einfache Weise selbst montieren kann. Dünne Blätter setzen eine schmale Sägeblattführung voraus - dicke Blätter eine breite Führung. Der Anwender wird so in kurzer Zeit die gewünschte Sägeblattführung montiert haben und kann somit entsprechend dem gewählten Sägeblatt eine optimale Führung realisieren. Ein Auswechseln der Sägeblattführung gewährleistet einerseits eine hoch bleibende Qualität der Rollen und eine maximale Lebensdauer der Sägeblätter.

Dies wird ermöglicht mit einer Stichsäge mit den Merkmalen des Anspruchs 1. Die erfindungsgemäße Stichsäge weist eine Sägeblattführung auf die pendelnd am Lagerabschnitt gelagert ist.

In einer besonders vorteilhaften Weiterbildung weist die Stichsäge, eine U-förmige Ausnehmung für die Sägeblattführung auf, die zwischen zwei Schenkeln, der U-förmigen Ausnehmung angeordnet ist, wobei das Befestigungselement die beiden Schenkel, durchdringt und wobei das Befestigungselement wenigstens einen Gleitabschnitt aufweist, das in wenigstens einem Schenkel, angeordnet ist und in dem Schenkel, einen Gleitsitz hat.

Dadurch, dass der Betätigungsabschnitt eine Ausnehmung für ein Werkzeug, insbesondere einen Schraubendreher, aufweist, ist es besonders leicht bedienbar. Es ist zusätzlich eine sichere Arretierung gegeben.

Dadurch, dass das Befestigungselement ein Gewinde aufweist, mit dem es in der Stichsäge verschraubbar ist, ist eine besonders leicht herstellbare Ausbildung möglich.

Besonders vorteilhaft ist es, wenn das Gewinde eine Beschichtung aufweist, die ein Lösen des Befestigungselements erschwert.

Ein System bestehend aus wenigstens einer Stichsäge und mehreren Sägeblattführungen für die wenigstens eine Stichsäge, wobei die Sägeblattführungen für unterschiedliche Sägeblätter ausgelegt sind, ermöglichen Anwendern besonders leichte Anpassungen an verschiedene Sägeanwendungen.

### Zeichnung

Nachstehend ist die Erfindung anhand eines Ausführungsbeispiels mit zugehöriger Zeichnung näher erläutert. Es zeigen:
- Figur 1: eine Seitenansicht der erfindungsgemäßen Stichsäge,
- Figur 2: eine perspektivische Ansicht eines Ausschnitts der Stichsäge mit einer ersten Befestigung,
- Figur 3: eine Explosionsdarstellung der Figur 2,
- Figur 4: eine Vorderansicht der Befestigung der Figur 2,
- Figur 5: eine Explosionsdarstellung der Figur 4,
- Figur 6: eine Explosionsdarstellung ähnlich der Figur 3 jedoch mit einer abgewandelten Rolle,
- Figur 7: ein nicht erfindungsgemäßes Beispiel einer Befestigung und
- Figur 8: einen Schnitt gemäß den Schnittlinien VIII-VIII in der Figur 7.

### Ausführungsbeispiel

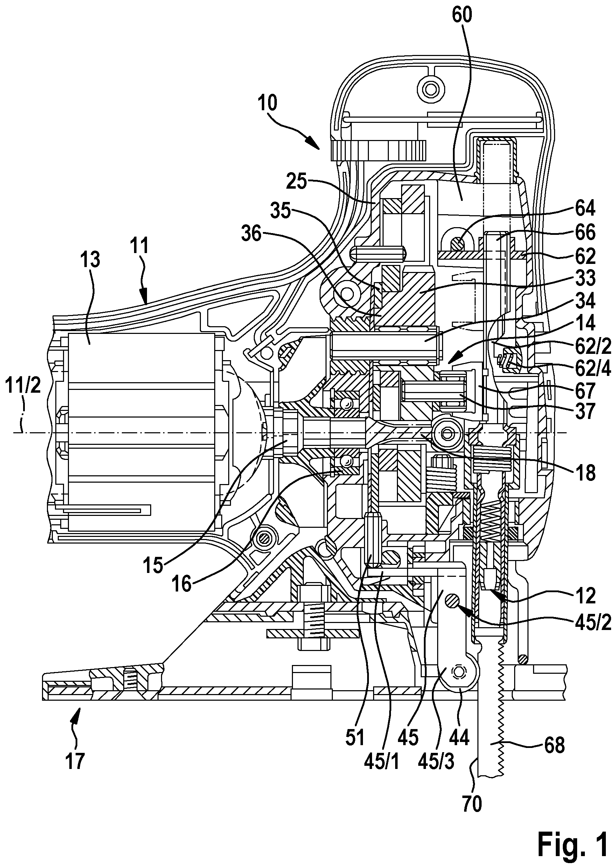

Der in Figur 1 gezeigte Längsschnitt einer handgeführten Stichsäge 10 zeigt deren Gehäuse 11, das einen Motor 13 sowie im Getriebegehäuse 25 ein Getriebe 14 trägt. Das Getriebe 14 überträgt die Drehbewegung des Motors 13 auf eine Hubstange 66 und ein am unteren Ende der Hubstange 66 gespanntes Sägeblatt 68. Das Gehäuse 11 ist auf einer Fußplatte 17 winkelverstellbar angeordnet, zum sicheren Aufsetzen und Führen auf einem nicht dargestellten Werkstück.

Der Motor 13 weist eine als Antriebswelle 15 dienende Motorwelle auf, die in einem Wellenlager 16 im Gehäuse 11 drehbar gelagert ist. Die Antriebswelle 15 endet in einem Antriebsritzel 18, das mit einem Stirnzahnrad 33 kämmt, das um eine Achse 34 im Getriebegehäuse 25 drehbar gelagert ist.

Auf seiner dem Motor 13 zugewandten Stirnseite trägt das Stirnzahnrad 33 einen als Bund ausgestalteten Exzenter 36, der in eine langlochartige Ausnehmung eines Gabelhebels 35 geführt greift.

Auf der vorderen, dem Motor 13 abgewandten Stirnseite des Zahnrads 33 trägt dieses eine exzentrisch angeordnete Kurbel 37, die in ein langlochartiges, besonders drehfest mit der Hubstange 66 verbundenes Gleitstück 67 eingreift und die Drehbewegung des Zahnrades 33 in eine vertikale Hin- und Herbewegung der Hubstange 66 umwandelt.

Die Hubstange 66 ist in einem oberen, eine Lagerbuchse tragenden Abstützbügel 62 im Getriebegehäuse 25 längs hin- und herverschieblich gelagert. Der Abstützbügel 62 ist schwenkbeweglich um einen parallel zur Grundplatte 17 und quer zur Längsachse 11/2 des Gehäuses 11 gelagerten Stift 64 im Getrieberaum 60 der Stichsäge 10 gelagert. Der Stift 64 bildet den Drehpunkt für die Pendelbewegung des Sägeblatts 68 gemeinsam mit der Hubstange 66.

Der Abstützbügel 62 trägt zwei symmetrisch zum Mittelpunkt der Lagerbuchse sowie quer zur Längsachse 11/2 des Gehäuses 11 sich nach unten erstreckende Abstützschenkel 62/2, zwischen deren dornartigen Zentriernasen und der inneren Stirnwand des Getriebegehäuses 25 sich je eine Druckfeder 62/4 abstützt und den Abstützbügel 62 schwingenartig gemeinsam mit der Hubstange 66 um die Achse des Stifts 64 nach hinten zu drücken sucht. Dadurch wird nach jedem in Vorschubrichtung verlaufendem Pendelhub durch die Wirkung der Druckfedern 62/4 die Hubstange 66 gemeinsam mit dem Sägeblatt 68 zurückgedrückt. Hierbei wird eine Sägeblattführung in Form eines Rollenhebels 45 über den Rücken 70 des Sägeblatts 68 ebenfalls nach hinten und demzufolge der Stößel 51 nach oben gegen die Nase des Gabelhebels 35 gedrückt und diesem bzw. dessen Nase bei der Pendelbewegung nach oben folgt.
Die Abstützschenkel 62/2 sind so angeordnet, dass sich das Gleitstück 67, das ebenfalls quer zur Längsachse 11/2 der Achse des Gehäuses 11 verläuft, sich mit seinen beiden äußeren Enden bzw. Schultern von hinten daran sicher abstützt, so dass die Hubstange 66 bei ihrer Auf- und Abbewegung mit ihrem Gleitstück 67 auf den Abstützschenkeln 62/2 gegen Verdrehen geführt gleitet. Dadurch wird ein besonders robustes Abstützlager für die Hubstange 66 gegen Verdrehen geschaffen, um das Drehmoment aufzunehmen, welches beim Kurvenschneiden mit der Stichsäge 10 entsteht und das über das Stichsägeblatt 68 auf die Hubstange 66 übertragen wird. Dabei verhindert der Abstützbügel 62 beim Kurvensägen Verwindungen des Getriebegehäuses, ermöglicht dessen Leichtbauweise, wobei dessen Lebensdauer verbessert wird und außerdem leitet der Abstützbügel 62 über seine Gleitschenkel 62/2 den Pendelrückhub auf die Hubstange 66 ein.
Der Exzenter 36 auf der Rückseite des Zahnrads 33 überträgt seine kreisende Bewegung beim Drehen des Zahnrads 33 auf den einarmigen Gabelhebel 35, so dass dieser um einen Drehpunkt pendelt und dabei mittels seiner Nase seine Hin- und Herschwenkbewegung auf einen Stößel 51 überträgt. Der Stößel 51 wird beim Hin- und Herschwenken des Gabelhebels 35 durch dessen Nase auf- und abbewegt, die pendelnd über die obere Stirnseite des Stößels 51 gleitet.

Mit seiner unteren Stirnseite stützt sich der Stößel 51 auf einen maschinenseitiger Arm 45/1 eines Rollenhebels 45. Dieser ist um einen Drehpunkt 45/2 im Getriebegehäuse 60 schwenkbar gelagert und nimmt an seinem sägeblattseitigen Arm 45/3 eine Rolle 44 drehbar auf. Die Rolle 44 stützt sich gegen den Rücken 70 des Sägeblatts 68. Bei seiner Schwenkbewegung um den Drehpunkt 45/2 erteilt der Rollenhebel 45 dem Sägeblatt 68 eine parallel zur Längsachse 11/2 des Gehäuses 11 verlaufende Pendelbewegung.

Das Sägeblatt 68 ist im unteren Ende der Hubstange 66 in einer Spanneinrichtung 12 lösbar eingespannt. Der Gabelhebel 35 ist mit einem Langloch übergreifend gleitbar auf den Exzenter 36 des Zahnrads 33 aufgesteckt.

Der Stößel 51 ragt abgedichtet aus dem Getriebegehäuse 60 heraus und kontaktiert einenends den Rollen- und anderenends den Gabelhebel 45, 35, so dass weder der Gabelhebel 35 noch der Rollenhebel 45 das Getriebegehäuse 60 bei ihrer Pendelbewegung durchgreifen müssen. Dadurch ist die Abdichtung des Getriebegehäuses 60 für den Durchtritt des Stößels 51 besonders einfach und wirkungsvoll, weil sie zylindrisch und entsprechend klein gehalten werden kann. Außerdem kann der Stößel 51 nur eine reine Axialbewegung und keine Querkraft auf den Rollenhebel 45 übertragen, so dass dessen Pendelbewegung besonders sauber, ohne Querschwingungen erfolgt.

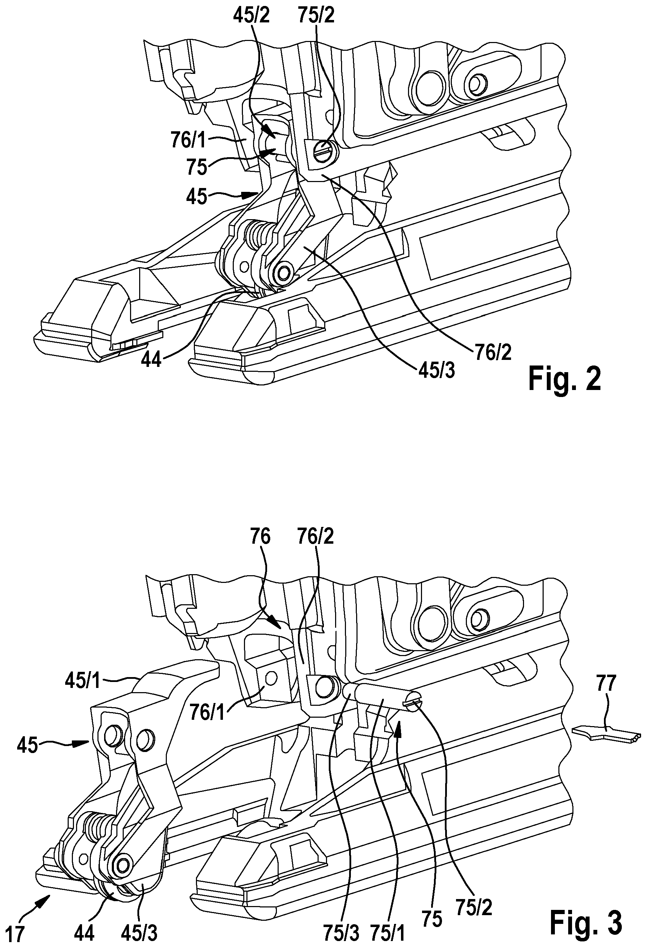

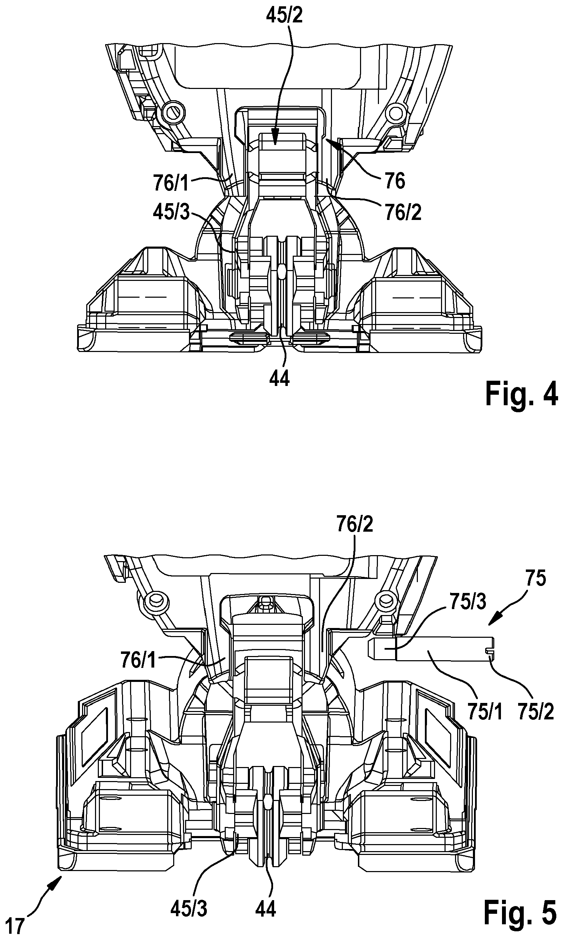

Die Figuren 2 bis 6 zeigen im Detail die Stichsäge 10 mit einer Sägeblattführung 45, an der sich ein Rücken 70 eines Sägeblatts 68 der Stichsäge 10 abstützt. Als Drehpunkt 45 dient ein vorzugsweise bolzenförmiges Befestigungselement 75, das einen Lagerabschnitt 75/1 auf weist, auf dem die Sägeblattführung 45 gelagert ist, so dass die Sägeblattführung 45 an der Stichsäge 10 gehalten ist. Das Befestigungselement 75 ist an der Stichsäge 10 wiederhol bzw. immer wieder in einer Verriegelungsstellung und einer Entriegelungsstellung positionierbar, so dass die Sägeblattführung 45 leicht austauschbar ist.

Hierzu weist das Befestigungselement 75 einen Betätigungsabschnitt 75/2 in Form einer Ausnehmung für einen Schraubendreher 77 auf, der von einem Anwender betätigbar ist, um das Befestigungselement 75 zu verriegeln und zu entriegeln. Das Befestigungselement 75 weist außerdem einen Riegelabschnitt 75/3 in Form eines Gewindes auf, mit dem es an der Stichsäge verriegelbar und entriegelbar ist. Das Gewinde weist eine Beschichtung 75/4 auf, die ein Lösen des Befestigungselements 75 erschwert.

Hervorzuheben ist, dass die Sägeblattführung 45, 450 pendelnd am Lagerabschnitt 75/1; 750/1 gelagert ist.

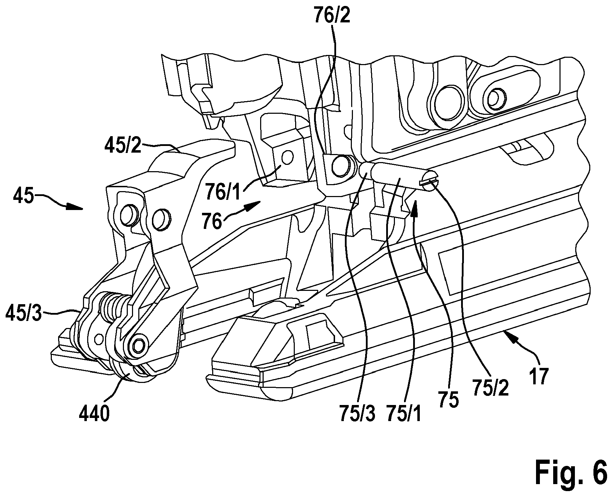

Die Stichsäge 10 weist eine U-förmige Ausnehmung 76 für die Sägeblattführung 45 auf, die zwischen zwei Schenkeln 76/1, 76/2 der U-förmigen Ausnehmung 76 angeordnet ist, wobei das Befestigungselement 75 die beiden Schenkel 76/1, 76/2 durchdringt. Das Befestigungselement 75 weist wenigstens einen Gleitabschnitt auf, das in einem Schenkel 76/1 angeordnet ist und in dem Schenkel 76/1 einen Gleitsitz hat.
Das als Gewindebolzen ausgebildete Befestigungselement ist in diesem Ausführungsbeispiel im Getriebedeckel der Stichsäge 10 verschraubt und wird mittels des Schraubendrehers 77 gelöst. Danach kann die als Rollenhebelbaugruppe Sägeblattführung ausgebaut und eine neue eingesetzt werde. Der Gewindebolzen wird danach wieder eingeschraubt. Der Gewindebolzen hat am Gewinde wie bereits ausgeführt eine Beschichtung. Diese verhindert ein unbeabsichtigtes Lösen der Teile.
Es sei noch erwähnt, dass in der Figur 6 eine alternative Rolle 440 gezeigt ist, um zu verdeutlichen, wie leicht ein optimiertes System für verschiedene Sägeblätter 68 ermöglicht wird.

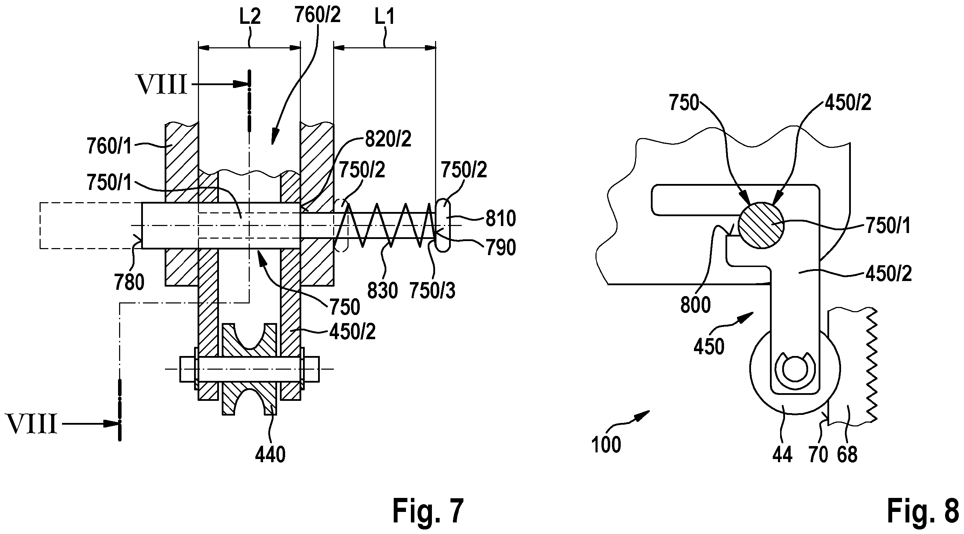

Die Figuren 7 und 8 zeigen eine nicht erfindungsgemäße Stichsäge 100 mit einer Sägeblattführung 450, an der sich ein Rücken 70 eines Sägeblatts 68 der Stichsäge 10 abstützt, wobei das Befestigungselement 750 einen Lagerabschnitt 750/1 aufweist, auf dem die Sägeblattführung 450, insbesondere pendelnd, gelagert ist, so dass die Sägeblattführung 450 an der Stichsäge 10 gehalten ist, und wobei das Befestigungselement 750 an der Stichsäge 10 wiederholt in einer Verriegelungsstellung und einer Entriegelungsstellung positionierbar ist, so dass die Sägeblattführung 450 austauschbar ist.

Das Befestigungselement 750 weist einen Betätigungsabschnitt 750/2 auf, mit dem ein Anwender betätigbar ist, um das Befestigungselement 750 durch Verschieben für die Sägeblattführung 450 zu verriegeln und zu entriegeln. Das Befestigungselement 750 ist vorzugweise bolzenfömig mit mehreren Abschnitten mit runden Querschnittsflächen.

Das Befestigungselement 750 weist einen Riegelabschnitt in Form eines Bunds 810 und einer Schulter 820 auf, mit dem es an der Stichsäge 100 verriegelbar und entriegelbar ist. Der Bund 810 ist bspw. an den Gleitabschnitt 750/3 angeschweißt. Der Gleitabschnitt 750/3 kann auch in einen ringförmigen Bund 810 eingepresst sein.

Die Sägeblattführung 450 ist ebenfalls bevorzugt pendelnd am Lagerabschnitt 750/1 gelagert.

Die Stichsäge 100 weist ebenfalls eine U-förmige Ausnehmung 760 für die Sägeblattführung 450 auf, die zwischen zwei Schenkeln 760/1, 760/2 der U-förmigen Ausnehmung 760 angeordnet ist. Das Befestigungselement 750 durchdringt die beiden Schenkel 760/1, 760/2. Das Befestigungselement 750 weist zwei Gleitabschnitte auf: Zum einen ist es der Lagerabschnitt 750/1 und zum andern der Gleitabschnitt 750/3 auf. Der Lagerabschnitt 750/1 ist in einer Bohrung im einen Schenkel 760/1 und der Gleitabschnitt 750/3 in einer Bohrung im andern Schenkel 760/2 angeordnet. Hierzu haben beide Abschnitte 750/1 und 750/3 einen Gleitsitz. Als Gleitsitz (oder auch Schiebesitz) ist eine Passung zwischen zwei Teilen zu verstehen, die ein leichtes Gleiten aber kein merkliches Spiel zwischen den Teilen erlaubt.

Das Befestigungselement 450 ist dadurch verschiebbar angeordnet. Der Lagerabschnitt 750/1 weist eine erste, vorzugsweise runde, Querschnittsfläche 780 auf, wobei sich an den Lagerabschnitt 750/1 der Gleitabschnitt anschließt, der eine zweite, vorzugsweise runde, Querschnittsfläche 790 aufweist, die kleiner als die erste Querschnittsfläche 780 ist. Die Sägeblattführung 450 weist eine Ausnehmung 800 auf, mit der es quer vom Befestigungselement 750 genommen werden kann. Zwischen dem Schenkel 760/2 und dem Bund 810 ist eine Feder 830 angeordnet, die das Befestigungselement in der Verriegelungsstellung sichert. Durch Drücken auf den Bund 810 wird das Befestigungselement 750 in die Entriegelungsstellung so verschoben, dass der Gleitabschnitt 830 in den Bereich der Ausnehmung 800 kommt. Die Sägeblattführung 450 kann dann entnommen und die gleiche oder eine andere wieder eingesetzt werden. Zu beachten ist, dass die Länge L1 des Gleitabschnitts 750/3 zusammen mit der Dicke des Schenkels 760/2 mindestens so groß, vorzugsweise etwas größer sein sollten wie die Breite L2 der U-förmigen Ausnehmung 760.

Beide Ausführungsbeispiele ermöglichen auf besonders einfache Weise ein System bestehend aus wenigstens einer Stichsäge 10; 100 und mehreren Sägeblattführungen 44; 440 für die wenigstens eine Stichsäge 10; 100, wobei die Sägeblattführungen für unterschiedliche Sägeblätter 68 auslegbar sind.

## Patentansprüche

1. Stichsäge (10) mit wenigstens einer an der Stichsäge (10) gehaltenen Sägeblattführung (45), an der sich ein Rücken (70) eines Sägeblatts (68) der Stichsäge (10) abstützt, wobei ein Befestigungselement (75) einen Lagerabschnitt (75/1) aufweist, auf dem die als Rollenhebelbaugruppe ausgebildete Sägeblattführung (45) pendelnd gelagert ist, und wobei das Befestigungselement (75) an der Stichsäge (10) wiederholt in einer Verriegelungsstellung und einer Entriegelungsstellung positionierbar ist, so dass die Sägeblattführung (45) austauschbar ist, **dadurch gekennzeichnet, dass** das Befestigungselement (75) ein als Riegelabschnitt (75/3) ausgebildetes Gewinde (75/3) zur Verschraubung mit der Stichsäge (10) und einen vom Anwender betätigbaren Betätigungsabschnitt (75/2) zur einfachen Verriegelung und Entriegelung des Befestigungselements (75) an der Stichsäge (10) aufweist, wobei der Betätigungsabschnitt (75/2) eine Ausnehmung für ein Werkzeug (77), insbesondere einen Schraubendreher, aufweist.

2. Stichsäge (10) nach Anspruch 1, wobei die Stichsäge (10) eine U-förmige Ausnehmung (76) für die Sägeblattführung (45) aufweist, die zwischen zwei Schenkeln (76/1, 76/2) der U-förmigen Ausnehmung (76) angeordnet ist, wobei das Befestigungselement (75) die beiden Schenkel (76/1, 76/2) durchdringt und wobei das Befestigungselement (75) wenigstens einen Gleitabschnitt aufweist, das in wenigstens einem Schenkel (76/1) angeordnet ist und in dem Schenkel (76/1) einen Gleitsitz hat.

3. Stichsäge (10) nach Anspruch 1, wobei das Gewinde (75/3) eine Beschichtung (75/4) aufweist, die ein Lösen des Befestigungselements (75) erschwert.

4. System bestehend aus wenigstens einer Stichsäge (10) nach einem der vorhergehenden Ansprüche und mehreren Sägeblattführungen (44) für die wenigstens eine Stichsäge (10), wobei die Sägeblattführungen (44) für unterschiedliche Sägeblätter (68) ausgelegt sind.

## Claims

1. Jigsaw (10) having at least one saw blade guide (45) held on the jigsaw (10), on which a back (70) of a saw blade (68) of the jigsaw (10) is supported, wherein a fastening element (75) has a bearing portion (75/1) on which the saw blade guide (45) configured as a roller lever assembly is mounted with a pendulum motion, and wherein the fastening element (75) can be repeatedly positioned on the jigsaw (10) in a locking position and an unlocking position, such that the saw blade guide (45) can be exchanged, **characterized in that** the fastening element (75) has a thread (75/3), configured as a locking portion (75/3), for screwing with the jigsaw (10) and an actuating portion (75/2), actuatable by the user, for simple locking and unlocking of the fastening element (75) on the jigsaw (10), wherein the actuating portion (75/2) has a recess for a tool (77), in particular a screwdriver.

2. Jigsaw (10) according to Claim 1, wherein the jigsaw (10) has a U-shaped recess (76) for the saw blade guide (45), which is disposed between two limbs (76/1, 76/2) of the U-shaped recess (76), wherein the fastening element (75) extends through the two limbs (76/1, 76/2), and wherein the fastening element (75) has at least one slide portion, which is disposed in at least one limb (76/1) and is seated in a sliding manner in the limb (76/1).

3. Jigsaw (10) according to Claim 1, wherein the thread (75/3) has a coating (75/4) that makes it difficult for the fastening element (75) to be detached.

4. System consisting of at least one jigsaw (10) according to any one of the preceding claims and of a plurality of saw blade guides (44) for the at least one jigsaw (10), wherein the saw blade guides (44) are designed for differing saw blades (68).

## Revendications

1. Scie sauteuse (10) comprenant au moins un guide de lame de scie (45) fixé sur la scie sauteuse (10), sur lequel s'appuie un dos (70) d'une lame de scie (68) de la scie sauteuse (10), un élément de fixation (75) présentant une portion de palier (75/1) sur laquelle est supporté de manière pendulaire le guide de lame de scie (45) réalisé sous forme de module de levier à galet, et l'élément de fixation (75) pouvant être positionné sur la scie sauteuse (10) de manière répétée dans une position de verrouillage et une position de déverrouillage de telle sorte que le guide de lame de scie (45) puisse être remplacé, **caractérisée en ce que** l'élément de fixation (75) présente un filetage (75/3) réalisé sous forme de portion de verrou (75/3) pour se visser à la scie sauteuse (10) et une portion d'actionnement (75/2) pouvant être actionnée par l'utilisateur pour le verrouillage et le déverrouillage simples de l'élément de fixation (75) sur la scie sauteuse (10), la portion d'actionnement (75/2) présentant un évidement pour un outil (77), en particulier un tournevis.

2. Scie sauteuse (10) selon la revendication 1, dans laquelle la scie sauteuse (10) présente un évidement en forme de U (76) pour le guide de lame de scie (45), qui est disposé entre deux branches (76/1, 76/2) de l'évidement en forme de U (76), l'élément de fixation (75) traversant les deux branches (76/1, 76/2) et l'élément de fixation (75) présentant au moins une portion de glissement qui est disposée dans au moins une branche (76/1) et qui présente, dans la branche (76/1), un siège coulissant.

3. Scie sauteuse (10) selon la revendication 1, dans laquelle le filetage (75/3) présente un revêtement (75/4) qui rend difficile un desserrage de l'élément de fixation (75).

4. Système constitué d'au moins une scie sauteuse (10) selon l'une quelconque des revendications précédentes et de plusieurs guides de lames de scie (44) pour l'au moins une scie sauteuse (10), les guides de lames de scie (44) étant conçus pour différentes lames de scie (68).
